# EUROPEAN PATENT APPLICATION

(11) **EP 4 700 954 A1**
(43) Date of publication of application: **25.02.2026**
(21) Application number: 24813913.1
(22) Date of filing: 10.04.2024
(51) Int. Cl.: H01M 50/367, H01M 50/528, H01M 50/152

(54) **BATTERY, BATTERY MODULE AND POWER DEVICE**

(30) Priority: 29.05.2023 CN 202321339316 U
(71) Applicant: BYD Company Limited, Shenzhen, Guangdong 518118 (CN)
(72) Inventor: LIU, Yanchu, Shenzhen, Guangdong 518118 (CN); CHEN, Jiankang, Shenzhen, Guangdong 518118 (CN); MA, Zhiying, Shenzhen, Guangdong 518118 (CN); WANG, Yadong, Shenzhen, Guangdong 518118 (CN)
(74) Representative: Aldridge, Henry Alexander
(86) International application number: PCT/CN2024/087040
(87) International publication number: WO 2024/244707

(57) **Abstract**

A battery, a battery assembly, and a power equipment. The battery comprises a housing, a cover plate and a current collecting disk, wherein a battery core accommodating cavity is formed in the housing; at least one end of the housing forms an opening; the cover plate is connected to the housing and covers the opening; an explosion-proof valve is disposed on the cover plate; the current collecting disk is disposed within the battery core accommodating cavity; and the current collecting disk is spaced apart from at least a portion of the cover plate to form a pressure relief cavity in communication with the explosion-proof valve.

## Description

### CROSS-REFERENCE TO RELATED APPLICATIONS

The present disclosure claims priority to Chinese Patent Application No. 202321339316.4, filed on May 29, 2023, entitled "BATTERY, BATTERY ASSEMBLY, AND POWER EQUIPMENT", which is incorporated herein by reference in its entirety.

### FIELD

The present disclosure relates to the field of batteries, and in particular to a battery, battery assembly, and power equipment.

### BACKGROUND

In the related art, battery explosion-proof valves are usually integrated into the top cover and bottom cover of the housing, and the explosion-proof valves are in close contact with the electrode core and the electrode tab. When the battery core undergoes thermal runaway, gas from the battery cannot be efficiently discharged, and the battery has safety problem. If the explosion-proof valve and the top cover are stamped into an integral structure, the detonation pressure of the explosion-proof valve is above 1.5 MPa, and the detonation pressure of the explosion-proof valve is excessively high, and there is a risk of the battery explosion.

### SUMMARY

The present disclosure aims to solve at least one of the technical problems existing in the prior art. Therefore, one object of the present disclosure is to provide a battery. Through arranging a current collecting disk between the cover plate and the battery core, and spacing the current collecting disk from at least a portion of the cover plate and forming a pressure relief cavity communicated with the explosion-proof valve, and the pressure relief cavity providing space for circulation and accumulation discharge of gas in the battery, and gas in the battery core accommodating cavity entering the pressure relief cavity more easily flushing the explosion-proof valve away, the pressure relief ability of the battery is enhanced.

The present disclosure further provides a battery assembly having the above-described battery.

The present disclosure further provides a power equipment having the battery described above.

A battery according to the present disclosure includes: a housing in which a battery core accommodating cavity is formed, and at least one end of the housing forms an opening; a cover plate is connected to the housing and covering the opening, an explosion-proof valve mounting hole is provided on the cover plate; a current collecting disk being disposed within the battery core accommodating cavity, and the current collecting disk is spaced apart from at least a portion of the cover plate to form a pressure relief cavity in communication with the explosion-proof valve.

The battery according to the present disclosure, the explosion-proof valve and the cover plate is welded separately, decreasing an detonation pressure of the explosion-proof valve. At the same time, a pressure relief cavity is formed between the cover plate and the current collecting disk, and the pressure relief cavity communicating with the explosion-proof valve mounting hole provides a circulation space for high-pressure gas inside the battery. When the pressure in the pressure relief cavity reaches the detonation pressure of the explosion-proof valve, the explosion-proof valve is opened and the pressure is relieved. The explosion-proof valve is more easily flushed open by the high-pressure gas because the detonation pressure of the explosion-proof valve is lower, thereby improving the safety of the battery.

A battery assembly according to the present disclosure, including the battery described above.

The battery assembly according to the present disclosure is arranged with the battery of the above-described embodiment, and since the battery assembly of the present disclosure is arranged with the battery of the above-described embodiment, the explosion-proof valve detonation pressure in the battery assembly is lower, the pressure relief capability of the battery assembly for high pressure gas is better, and the safety of the battery assembly is higher.

The power equipment according to the present disclosure, including the battery described above.

The power equipment according to the present disclosure is provided with the battery of the above-described embodiment, and since the power equipment of the present disclosure is provided with the battery of the above-described embodiment, safety of the battery in the power equipment is higher and safety performance of the power equipment is better.

The additional aspects and advantages of the present disclosure are partially provided in the following descriptions, some of which will become apparent from the following descriptions or may be learned from practices of the present disclosure.

### BRIEF DESCRIPTION OF THE DRAWINGS

FIG. 1 is an exploded view of a battery, according to one embodiment of the present disclosure;
FIG. 2 is a schematic diagram of the assembly of a battery housing with a cover plate, according to an embodiment of the present disclosure;
FIG. 3 is a schematic diagram of the structure of a battery current collecting disk, according to an embodiment of the present disclosure;
FIG. 4 is a schematic diagram of the connection of a battery cover plate and a current collecting disk, according to an embodiment of the present disclosure;
FIG. 5 is a schematic diagram of the assembly of a battery housing with a cover plate, according to an embodiment of the present disclosure;
FIG. 6 is a cross-sectional view of the assembly of a battery housing and a cover plate, according to an embodiment of the present disclosure;
FIG. 7 is a schematic diagram of the structure of a battery housing and a cover plate, according to an embodiment of the present disclosure.
FIG. 8 is a schematic diagram of the structure of a battery assembly, according to one embodiment of the present disclosure.
FIG. 9 is a schematic diagram of the structure a power equipment, according to an embodiment of the present disclosure.

Reference numerals:
a battery assembly 1000; power equipment 10000;
a battery 1;
a housing 11, a battery core accommodating cavity 111, the opening 112;
a cover plate 12, an explosion-proof valve mounting hole 121;
a current collecting disk 13, the pressure relief groove 131, a first groove portion 1311, a second groove portion 1312, a bent connecting portion 132, a outer edge portion 133, an avoidance notch 134, an abutment surface 135;
a first protrusion 141, a second protrusion 142;
an explosion-proof valve protecting sheet 15; an explosion-proof valve 16;
an aluminum block 171, a sealing ring 172, a electrode post 173, an insulating sheet 174, a top spacer 175;
a rubber peg 181, a sealing cover 182; a battery core 20, a tab 21.

### DETAILED DESCRIPTION

The embodiments of the present disclosure are described below in detail. Examples of the embodiments are shown in the accompanying drawings, and same or similar reference signs in all the accompanying drawings indicate same or similar components or components having same or similar functions. The embodiments described below with reference to the accompanying drawings are exemplary, are intended to explain the present disclosure and cannot be construed as a limitation on the present disclosure.

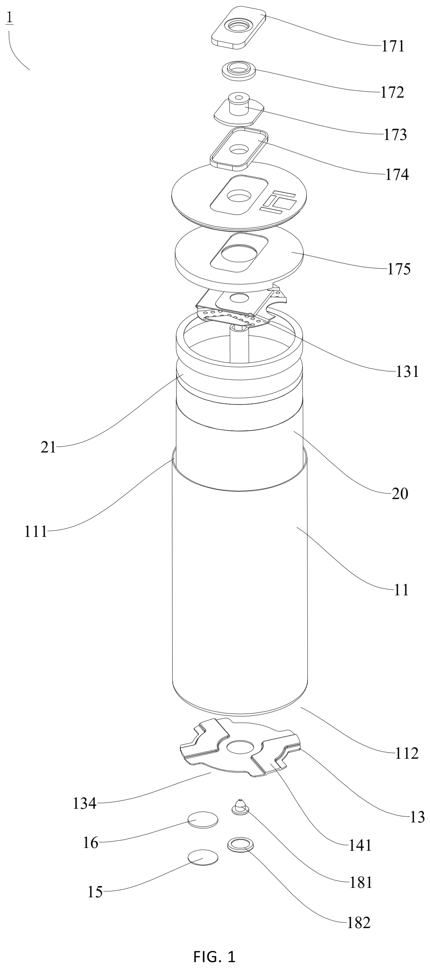

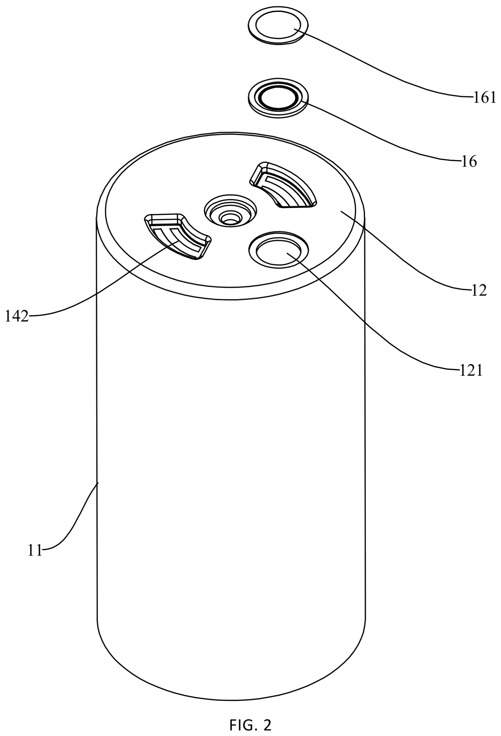

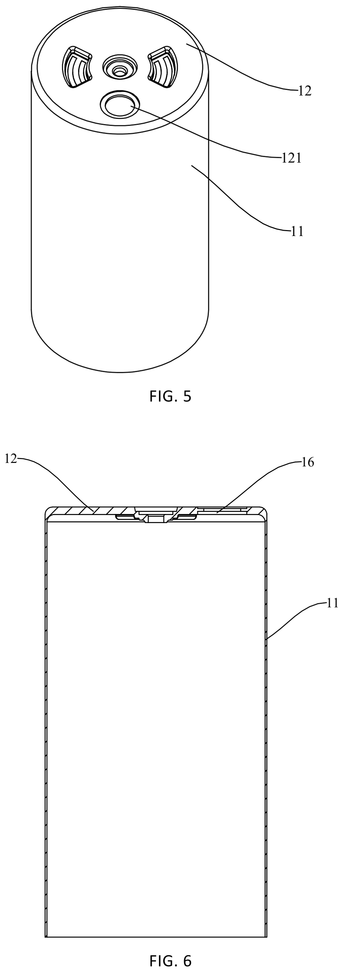

A battery 1 according to an embodiment of the present disclosure is described below with reference to FIG. 1 to FIG. 7.

A battery according to the present disclosure includes a housing 11, a cover plat 12, and a current collecting disk. A battery core accommodating cavity 111 is formed in the housing 11, and at least one end of the housing 11 is formed with an opening 112. The cover plate 12 is connected to the housing 11 and covers the opening 112. An explosion-proof valve 16 is disposed on the cover plate 12. The current collecting disk 13 is disposed within the battery core accommodating cavity 111, and the current collecting disk 13 is spaced apart from at least a portion of the cover plate 12 to form a pressure relief cavity communicated with the explosion-proof valve 16.

As shown in FIG. 1, a battery core accommodating cavity 111 is formed within the housing 11, and the battery core 20 are received in the battery core accommodating cavity 111, enabling support and protection of the battery core 20. In some embodiments, at least one end of the housing 11 is formed with an opening 112. It can be understood that the opening 112 may be formed at one end of the housing 11, the other end of the housing 11 and the cover plate 12 may be integrally formed, so that it is convenient for the battery core 20 to be assembled into the battery core accommodating cavity 111. During assembly of the battery core 20, the battery core 20 enters the battery core accommodating cavity 111 from the opening 112, and after the battery core 20 is assembled, the battery core accommodating cavity 111 is sealed by welding the cover plate 12 to the opening 112, reducing the processing difficulty of the battery 1, and when the battery core 20 needs to be removed or replaced, the removal of the battery core 20 is completed by removing the cover plate 12 at one end of the opening 112, thereby simplifying the steps of assembly and removal of the battery core 20.

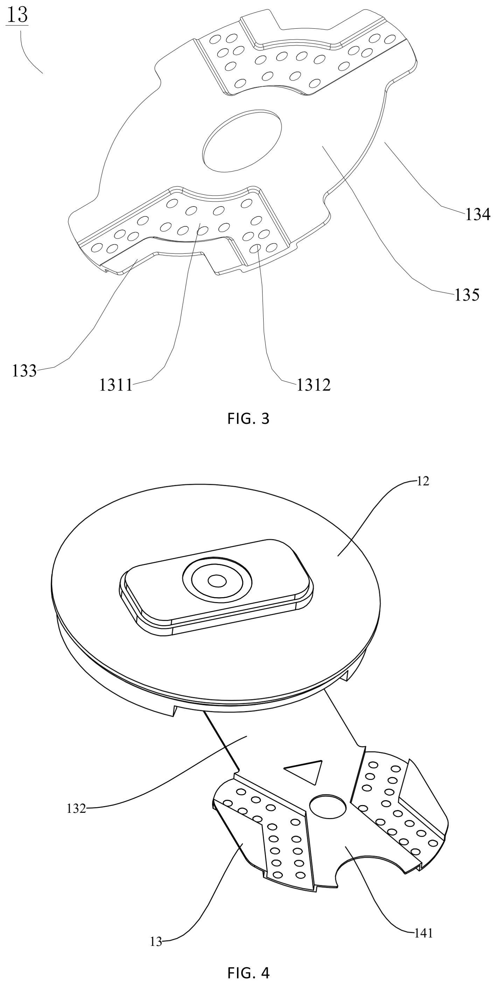

The cover plate 12 is welded with the housing 11 by welding and closes the opening 112. In the related art, the cover plate 12 is usually in the form of an integral stamping with the housing 111. Due to the requirement of strength of the battery cover plate 12, the thickness of the cover plate 12 and housing 11 is usually thick. By providing the cover plate 12 and the housing 11 separately and welding, the present disclosure provides, the present disclosure can effectively reduce the wall thickness of the cover plate 12 and the housing 11, and reduce processing costs. And an explosion proof valve 16 valve is disposed on the cover plate 121, and a current collecting disc 13 is arranged between the explosion-proof valve 16 and a battery cell at intervals, and the current collecting disk 13 is spaced from at least portion of the cover plate 12, so that the explosion-proof valve 16 on the cover plate 12 is not in direct contact with the battery core 20. When the battery core 20 undergoes thermal runaway, the battery core 20 does not block the explosion-proof valve 16, so as to ensure the exhaust effect, and ensure that the gas pressure in the battery core accommodating cavity 111 is stable. In some embodiments, a pressure relief cavity is formed between the current collecting disk 13 and the explosion-proof valve 16, and the pressure relief cavity is communicated with the explosion-proof valve 16. As shown in FIG. 3, an avoidance notch is formed on at least portion of the periphery of the current collecting disk 13, and during assembly of the current collecting disk 13 with the housing 11, a connection gap is left between the avoidance notch and at least portion of the inner wall of the housing 11. High pressure gas generated in the battery core 20 flows into the current collecting disk 131 through the avoidance notch and collects into the pressure relief cavity. Since the pressure relief cavity communicates with the explosion-proof valve 16, when the high pressure gas collected in the pressure relief cavity reaches the detonation pressure of the explosion-proof valve 16, the explosion-proof valve 16 is flushed open by high-pressure gas. Due to the thinner wall thickness of the cover plate 12, the explosion pressure of the explosion-proof valve 16 can be made lower, and the gas flushes open and exhausts from the explosion-proof valve 16, ensuring a stable pressure in the battery core accommodating cavity 111. In some embodiments, because the pressure relief cavity is provided between the current collecting disk 13 and the explosion-proof valve 16, the pressure relief cavity reserves sufficient space for high-pressure gas to be stored and exhausted, ensuring the exhaust and pressure relief function of the battery 1, and further ensuring the safety of the battery 1

The battery 1 according to the present disclosure simplifies the assembly step of the battery core 20 by forming an opening in at least one end of the housing 11 from which the battery core 20 enters the battery core accommodating cavity 111. The cover plate 12 is arranged separately from the housing 11 and connected to the housing 11 by welding, whereby the wall thickness of the housing 11 and the cover plate 12 can be reduced, and the battery 1 processing cost can be reduced. An explosion-proof valve 16 is integrated on the cover plate 12, and a current collecting disk 13 is arranged between the explosion-proof valve 16 and the battery core 20, preventing the explosion-proof valve 16 from directly contacting with the battery core 20, and ensuring that the battery core 20 do not block the explosion-proof valve 16, thereby the exhaust and pressure relief ability of the battery 1 is guaranteed. In some embodiments, an avoidance notch is formed on the current collecting disk 13, and a connection gap is formed between the current collecting disk 13 and at least portion of the inner wall of the housing 11, thus high pressure gas generated by the battery core 20 can enter from the connection gap into the pressure relief cavity, which communicates with the explosion-proof valve 16, and when the gas pressure in the relief cavity reaches the detonation pressure of the explosion-proof valve 16, the high pressure gas can flush open and discharge out of the explosion-proof valve 16, ensuring the battery 1 pressure relief ability, maintaining the pressure in the battery core accommodating cavity 111 stable, and improving the safety of the battery 1.

In some embodiments of the present disclosure, a recess portion recessed away from each other is formed on at least one of the surfaces of the cover plate 12 and the current collecting disk 13 facing towards each other, and the recess portion defines a pressure relief cavity therein.

As shown in FIG. 1, a recess portion is formed on the current collecting disk 13 extending towards the battery core 20, and the current collecting disk 13 is connected to the electrode tab 21 of the battery core 20. The side of the recess portion facing towards the battery core 20 is connected to the battery core 20 by welding. By forming a recess portion on the current collecting disk 13 that extends towards the battery core 20, the bottom wall of the recess portion is in contact with and connected to the battery core 20, avoiding a welding gap when the plane of the current collecting disk 13 is welded to the plane of the battery core 20. Direct contact or welding between the plane of the current collecting disk 13 and the plane of the battery core 20 will result in excess height of the current collecting disk 13 after welding, affecting the connection between the current collecting disk 13 and the cover plate 12. And bottom wall of the recess portion is welded to the battery core 20, thereby increasing the contact area of the current collecting disk 13 with the battery core 20, and ensuring stability of the welding of the current collecting disk 13 to the battery core 20. At the same time, the recess portion of the current collecting disk 13 defines a pressure relief cavity, and a connection gap is formed between the avoidance notch formed on the current collecting disk 13 and the housing 11, and the high-pressure gas in the battery core accommodating cavity 111 enters the pressure relief cavity through the connection gap between the current collecting disk 13 and the housing 11 to facilitate the discharge of the gas flow. A recess portion may also be formed in the cover plate 12, and the recess portion on the cover plate 12 extends in a direction away from the current collecting disk 13. A pressure relief cavity is defined between the recess portion in the cover plate 12 and the current collecting disk 13, and the gas in the battery core accommodating cavity 111 flows into the current collecting disk 13 through the avoidance notch on the current collecting disk 13 and into the pressure relief cavity. The explosion-proof valve 16 is integrated into the cover plate 12 and connected to the pressure relief cavity, and when the pressure in the pressure relief cavity reaches the detonation pressure of the explosion-proof valve 16, the explosion-proof valve 16 is flushed open and relieved to facilitate the outflow of gas.

In some embodiments of the present disclosure, surface of the current collecting disk 13 towards the cover plate 12 is formed with a pressure relief groove 131, a bottom wall of the pressure relief groove 131 is spaced apart from the cover plate 12 and defines a pressure relief cavity. The pressure relief groove 131 at least partially overlaps with a projection of the explosion-proof valve mounting hole 121 in a thickness direction of the current collecting disk 13.

In some embodiments, surface of current collecting disk 13 towards the cover plate 12 is recessed to form the pressure relief groove 131, and the bottom wall of pressure relief groove 131 is spaced from the cover plate 12, and a pressure relief cavity is defined between the bottom wall of the pressure relief groove 131 and the cover plate 12, which provides space for high pressure gas to flow within the battery 1.

In some embodiments, a projection of the explosion-proof valve mounting hole 121 in a thickness direction of the current collecting disk 13 overlaps at least a portion of the pressure relief groove 131, and the pressure relief groove 131 and the bottom wall of the cover plate 12 towards the battery core accommodating cavity defines a pressure relief cavity, and the pressure relief cavity is a space for gas accumulation within the battery core 20. The pressure relief groove 131 is arranged at least partially directly opposite the projection of the explosion-proof valve mounting hole 121 in the thickness direction, and the air in the pressure relief cavity can be made to directly act on the explosion-proof valve 16 in the explosion-proof valve mounting hole 121. The gas in the battery 1 flows in the pressure-relief cavity, and the explosion-proof valve 16 is disposed in the explosion-proof valve mounting hole 121, and the explosion-proof valve mounting hole 121 at least partially overlaps the projection of the pressure relief groove 131 in the thickness direction of the current collecting disk 13, thus avoiding that the explosion-proof valve mounting hole 121 is blocked to affect the pressure relief efficiency, facilitating discharge of high-pressure gas from the explosion-proof valve 16. The larger the projected overlapping area of the explosion-proof valve mounting hole 121 and the pressure relief groove 131 in the thickness direction of the current collecting disk 13 is, the larger the exhaust area of the gas, and the explosion-proof valve mounting hole 121 can be perfectly opposite to the pressure relief groove 131 to ensure that the exhaust area of the gas at high pressure is maximized, thereby ensuring that the gas can be quickly exhausted through the explosion-proof valve 16, avoiding bursting of the battery 1 housing 11, and improving the battery 1 pressure relief efficiency and safety.

In some embodiments, overlapping area between projection of explosion-valve mounting hole 121 in thickness direction of current collecting disk 13 and pressure relief groove 131 is greater than or equal to 30% so as to ensure high-pressure gas exhaust space and ensure safety of battery 1.

In some embodiments of the present disclosure, the surface of the current collecting disk 13 facing away from the cover plate 12 is formed with a first protrusion 141 adapted to abut against and be welded with the electrode tab 21 of the battery core 20 within the battery core accommodating cavity 111.

In some embodiments, the first protrusion 141 abuts against the electrode tab 21 of the battery core 20 in the battery core accommodating cavity 111, and a bottom wall of the first protrusion 141 on the side towards the pole core abuts against the electrode tab 21 of the battery core 20. The first protrusion 141 may be welded to the electrode tab 21 of the battery core 20 using a penetration weld. The bottom wall of the first protrusion 141 on the side towards the pole core contacts the battery core 20, thereby increasing the welding area between the current collecting disk 13 and the battery cell. The welding point may be arranged at a side surface of the first protrusion 141 towards away from the electrode tab 21, and the welding between the first protrusion 141 of the current collecting disk 13 and the electrode tab 21, instead of the entire plane of the current collecting disk 13 being in direct contact with the electrode tab 21, avoids a welding gap between the current collecting disk 13 and the electrode tab 21, and avoids a excess height after the welding of the current collecting disk 13 and the electrode tab 21 to affect the welding of the current collecting disk 13 and the cover plate 12, thereby improving the welding yield.

The battery 1 according to the present disclosure forms a first protrusion 141 on the surface of the current collecting disk 13 facing away from the cover plate 12, which abuts against and is welded with the electrode tab 21 of the battery core 20, reducing the welding gap between the current collecting disk 13 and the electrode tab 21, while also facilitating welding of the current collecting disk 13 to the cover plate 12, improving weld yield.

In some embodiments of the present disclosure, a side of the cover plate 12 facing the current collecting disk 13 is formed with a second protrusion 142 adapted to abut against a surface of the current collecting disk 13 facing the cover plate 12.

In some embodiments, the second protrusion 142 is formed on a side of the cover plate 12 towards the current collecting disk 13, the second protrusion 142 abuts against the surface of the current collecting disk 13 facing the cover plate 12, and the cover plate 12 is compressed against the current collecting disk 13 by the second protrusion 142, facilitating welding between the cover plate 12 and the current collecting disk 13, and avoiding explosion caused by large areas of contact between the plane of the cover plate 12 and the plane of the current collecting disk 13, improving welding yield, and ensuring safety of the battery 1.

In some embodiments of the present disclosure, the current collecting disk 13 is arranged overlapping with the cover plate 12 in the thickness direction of the battery 1, wherein the projection of the first protrusion 141 and the second protrusion 142 on the plane on which the cover plate 12 lies are staggered or partially overlapping.

In some embodiments, the current collecting disk 13 is arranged overlapping the cover plate 12 in the thickness direction of the battery 1, thereby the battery 1 volume can be reduced. The projections of the first protrusion 141 and second protrusion 142 on the plane on which the cover plate 12 lies can be staggered, and the projections of the first protrusion 141 and the second protrusion 142 on the plane in which the cover plate 12 lies may also partially overlap. The first protrusion 141 is adapted to be abutted and be welded with the electrode tab 21, thus reducing a welding gap between the current collecting disk 13 and the electrode tab 21. And a side of the first protrusion 141 facing away from the electrode tab 21 is formed with a pressure relief groove 131, and one side of the first protrusion 141 supports the electrode tab 21, and a pressure relief cavity is defined between the other side of the first protrusion 141 and the cover plate 12. The pressure relief cavity communicates with the explosion-proof valve mounting hole 121, if the second protrusion 142 completely overlaps the projection of the first protrusion 141 onto the plane which the cover plate 12 lies, the explosion-proof valve mounting hole 121 will be blocked and the circulation of high pressure gas cannot be ensured, and too much pressure inside the battery 1 will cause the battery 1 to explode. The projection of the first protrusion 141 and the second protrusion 142 on the plane on which the cover plate 12 lies are staggered or partially overlapping, reserving space for the gas circulation, and ensuring that the gas can flow in the pressure relief cavity and can be discharged from the explosion-proof valve 16.

In some embodiments of the present disclosure, at least a portion of the first protrusion 141 is disposed around the central axial periphery of the current collecting disk 13, and/or at least a portion of the second protrusion 142 is disposed around central axial periphery of the cover plate 12.

In some embodiments, at least a portion of the first protrusion 141 is disposed around the central axial periphery of the current collecting disk 13 to form the pressure relief groove 131 around central axis of current collecting disk 13, increasing arrangement space of the pressure relief groove 131, defining the pressure relief cavity between the pressure relief groove 131 and cover plate 12 in which more high pressure gas can be circulated, thus improving pressure relief ability of battery 1.

In some embodiments of the present disclosure, a surface of the current collecting disk 13 towards the cover plate 12 is recessed to form a pressure relief groove 131 on a side of the current collecting disk 13, and to form a first protrusion 141 on the other side of the current collecting disk 13, and the first protrusion 141 abuts and is welded with the electrode tab 21. The current collecting disk 13 is recessed toward the surface of the cover plate 12 to form a pressure relief groove 131, and the pressure relief cavity is defined between the pressure relief groove 131 and the cover plate 12, and the high pressure gas in the battery core accommodating cavity 111 flows into the pressure relief groove 131 through the avoidance notch on the current collecting disk 13, and the pressure relief cavity is formed between the pressure relief groove 131 and the cover plate 12, and the pressure relief cavity is connected to an explosion-proof valve 16. When the gas pressure in the pressure relief cavity reaches the detonation pressure of the explosion-proof valve 16, the explosion-proof valve 16 is flushed open by the gas flow and depressurized. The current collecting disk 13 is recessed toward the surface of the cover plate 12 and forms a pressure relief groove 131, providing an exhaust space for high pressure gas, and facilitating gas outflow. And the first protrusion 141 on the other side of the current collecting disk 13 is formed, and the first protrusion 141 abuts against and is welded with the electrode tab 21. The bottom wall of the first protrusion 141 facing the side of the pole core abuts against and is welded with the electrode tab 21, increasing the welding area of the current collecting disk 13 and the battery core 20, and avoiding the entire plane of the current collecting disk 13 being directly welded with the electrode tab 21, thus reducing the welding gap, and improving the welding yield.

In some embodiments of the present disclosure, the pressure relief groove 131 includes a first groove portion 1311 and a second groove portion 1312 ; the first groove portion 1311 configured as a fan-shaped groove surrounding at least a portion of the outer circumference of the central axis of the current collecting disk 13; one end of the second groove portion 1312 communicates with an end of the first groove portion 1311 in the circumferential direction, and the second groove portion 1312 extends in the radial direction.

As shown in FIG. 3, the first groove portion 1311 is configured as a fan-shaped groove surrounding at least a portion of the outer circumference of the central axis of the current collecting disk 13, increasing the area of the pressure relief groove 131. One end of the second groove portion 1312 communicates with an end of the first groove portion 1311 in the circumferential direction. In some embodiments, the first groove portion 1311 may be configured as multiple and both ends of each of the first groove portions 1311 may be connected to a second groove portion 1312 extending in the radial direction. Multiple welding points are distributed in the first groove portions 1311 and the second groove portions 1312. The pressure relief groove 131 and the electrode tab 21 are welded using a penetration welding process, so that the welding between the pressure relief groove 131 and the electrode tab 21 is tighter and the welding gap can be reduced.

In addition, an end in the radial direction of the second groove portion 1312 is opened, thus the gas inside the battery 1 can enter the pressure relief groove 131, ensuring that gas accumulates in the pressure relief groove 131 when expansion occurs inside the battery 1, and the gas concentrated rapidly. The gas pressure in the pressure relief groove 131 can reflect the gas pressure inside the battery 1, and the explosion-proof valve 16 can be detonated in time after the pressure relief groove 131 pressure reaches the detonation pressure of the explosion-proof valve 16, improving the safety of the battery 1.

In some embodiments of the present disclosure, an outer peripheral edge of the current collecting disk 13 is formed with an outer edge portion 133 protruding outward along radial direction, and the other end of the second groove portion 1312 extends to the outer edge portion 133. After the welding of the current collecting disk 13 with the electrode tab 21 is completed, the outer edge portion abuts against at least a portion of the cover plate 12 to ensure that a large abutment area is maintained between the current collecting disk 13 and the cover plate 12, and the welding gap between the current collecting disk 13 and the cover plate 12 is reduced, and the welding yield is improved.

In some embodiments of the present disclosure, the current collecting disk 13 is formed with welding portions adapted to connect with the electrode tab 21, the welding portions are configured as multiple and arranged at intervals along the radial direction of the current collecting disk 13.

In some embodiments, the first protrusion 141 on the current collecting disk 13 abuts against and is welded to the electrode tab 21 on a side towards the electrode tab 21. A side of the bottom wall of the first protrusion 141 facing away from the electrode tab 21 is formed with multiple welding portions. The current collecting disk 13 is welded to the electrode tab 21 by multiple welding portions. Since the battery core 20 arranged in the battery core accommodating cavity 111 is wound, the welding portions are arranged at intervals in the radial direction of the current collecting disk 13, the welding area of the welding portions to the battery core 20 can be increased, and the welding of the battery core 20 to the current collecting disk 13 is more stable.

In some embodiments of the present disclosure, the pressure relief groove 131 are configured as multiple to surround the central axis of the current collecting disk 13 and are arranged at intervals in the circumferential direction of the central axis of the current collecting disk 13. The multiple pressure relief grooves 131 increases the flow area of high pressure gas in the battery 1, facilitates high pressure gas discharge, and improves the pressure relief ability of the battery 1.

In some embodiments of the present disclosure, the pressure relief grooves 131 are configured as two and are arranged symmetrically on the current collecting disk 13, wherein the second groove portion 1312 of one of the pressure relief groove 131 and the second groove portion 1312 of the other pressure relief groove 131 extend away from each other in the radial direction. The pressure relief grooves 131 are arranged symmetrically, increasing the space of the pressure relief groove 131 on the collecting disk 13, and increasing the gas flow area, and the second groove portions 1312 at both ends of each of the first groove portions 1311 extend radially away from each other, increasing the flow path of gas. When the high-pressure gas flushes open the explosion-proof valve 16, the gas enters the pressure-relief groove 131 through the first groove portions 1311 and flows out of the explosion-proof valve 16 through the second groove portions 1312, increasing the pressure-relief capacity of the battery 1.

In some embodiments of the present disclosure, the bottom wall of the first protrusion 141 is formed with a frosted surface. The bottom wall of the first protrusion 141 forms a frosted surface that can absorb laser light generated by welding during welding of the first protrusion 141 with the electrode tab 21, avoiding damage to the current collecting disk and electrode post by the welding laser, improving weld yield.

In some embodiments of the present disclosure, abutment surfaces 135 is formed on the current collecting disk 13 between two adjacent pressure relief grooves 131, and multiple second protrusions 142 are formed on a side of the cover plate 12 towards the current collecting disk 13. The second protrusions 142 are adapted to abut against corresponding abutment surface 135. The multiple second protrusions 142 formed on the cover plate 12 abut against and are welded with the abutment surface 135 by which the cover plate 12 is compressed against the abutment surface 135 of the current collecting disk 13, facilitating welding of the cover plate 12 to the current collecting disk 13, reducing welding gaps, avoiding weld explosion and increasing weld yield.

In some embodiments of the present disclosure, the battery 1 further includes an explosion-proof valve 16, which is disposed in the explosion-proof valve mounting hole 121 and is welded to the cover plate 12. The explosion-proof valve 16 is adapted to open the explosion-proof valve mounting hole 121 after the pressure of the pressure relief cavity reaches a preset pressure, and the thickness of the explosion-proof valve 16 is smaller than the thickness of the cover plate 12. The explosion-proof valve 16 is arranged separate from the cover plate 12 and welded to the cover plate 12 through the explosion-proof valve mounting hole 121 on the cover plate 12. Since the explosion-proof valve 16 and the cover plate 12 are not a stamped integral structure but are welded separately, the wall thickness of the explosion-proof valve 16 can be made thinner, and the thickness of the explosion-proof valve 16 may be smaller than that of the cover plate 12, so that the explosion-proof detonation pressure is lower. When the gas pressure increases in the pressure relief cavity and reaches the detonation pressure of the explosion-proof valve 16, the explosion-proof valve 16 is more easily flushed open by the high-pressure gas to relieve the pressure due to the lower detonation pressure of the explosion-proof valve 16, so that the safety performance of the battery 1 is better.

In some embodiments, explosion-proof valve 16 may be formed into a separate explosion-proof sheet by laser scoring or die stamping, which is welded to cover plate 12 through explosion-proof valve mounting hole 121 to achieve detonation pressure of 0.5 MPa to 1.5 MPa for explosion-proof valve 16, and when gas pressure inside battery 1 is excessive, explosion-proof valve 16 may be opened in time and pressure is relieved to ensure safety of the battery 1.

In some embodiments, after the explosion-proof valve 16 is welded to the cover plate 12, explosion-proof valve protecting sheet 15 may be designed on upper surface of explosion-proof valve 16 to prevent corrosion of explosion-proof valve 16 by electrolyte.

In some embodiments of the present disclosure, the current collecting disk 13 and the cover plate 12 are connected via a bent connecting portion 132. After welding between the current collecting disk 13 and the electrode tab 21 by the first protrusion 141, the current collecting disk 13 is connected with the cover plate 12 by the bent connecting portion 132, which reduces the number of components and increases integration of the components. At the same time, provision of the bent portion can prevent the current collecting disk 13 from being damaged due to excessive stress concentration when bending, thereby improving the bending resistance of the current collecting disc 13, and increasing the bending toughness of the current collecting disk 13, and avoiding breakage of the current collecting disk 13 during use of the battery 1, and enhancing stability of the battery 1 during use.

In some embodiments, the cover plate 12 on one end of the battery 1 is assembled with an aluminum block 171, an insulating sheet 174, a sealing ring 172, and a top spacer 175. After the aluminum block 171 is stamped, the electrode post 173 is riveted to the aluminum block 171, and the sealing ring 172 is compressed to seal the cover plate 12, and then the electrode post 173 and the aluminum block 171 are welded by laser to increase the bonding strength of the aluminum block 171 to the electrode post 173. In some embodiments, the top spacer 175 and the insulating sheet 174 are both made of an insulating material,

The battery assembly 1000 according to the present disclosure is briefly described below.

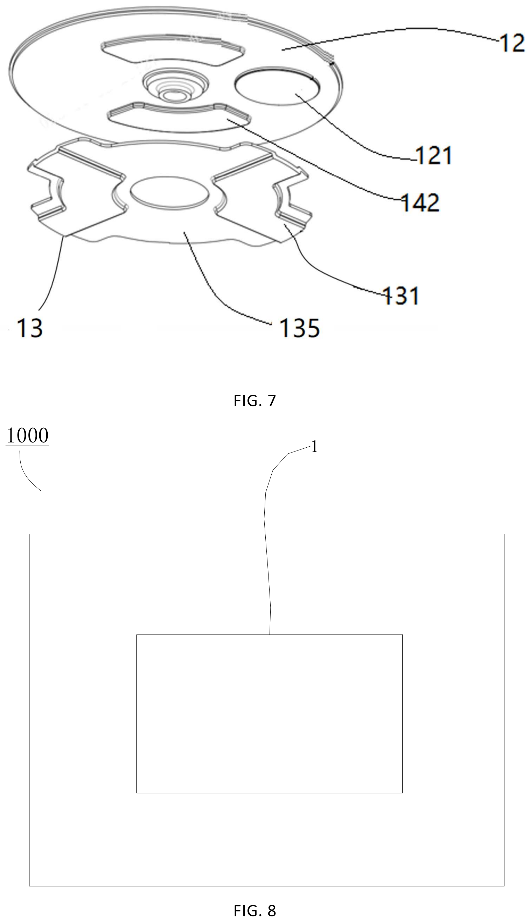

As shown in FIG. 8, the battery assembly 1000 according to the present disclosure includes a battery 1 according to any one of the embodiments described above. Since the battery assembly 1000 according to the present disclosure includes a battery 1 according to any one of the embodiments described above, the explosion-proof valve 16 in the battery assembly 1000 according to the present disclosure has a lower detonation pressure, and the battery assembly 1000 has a better pressure relief capability for high pressure gas and a higher safety.

A power equipment 10000 according to the present disclosure is briefly described below.

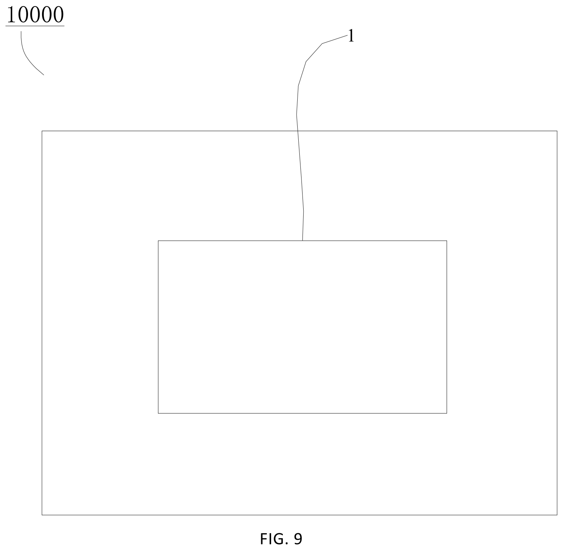

As shown in FIG. 9, the power equipment 10000 according to the present disclosure includes a battery 1 according to any one of the embodiments described above, since the power equipment 10000 according to the present disclosure includes the battery 1 according to any one of the embodiments described above, the safety of the battery 1 in the power equipment 10000 according to the present disclosure is higher and the safety performance of the power equipment 10000 is better. In some embodiments, the power equipment 10000 may be a vehicle.

In the description of this specification, the description of the reference terms "an embodiment", "some embodiments", "illustrative embodiment, "an example", "a specific example", "some examples", and the like means that specific features, structures, materials or characteristics described in combination with the embodiment(s) or example(s) are included in at least one embodiment or example of the present disclosure. In this specification, exemplary descriptions of the foregoing terms do not necessarily refer to the same embodiment or example. In addition, the described specific features, structures, materials, or characteristics may be combined in a proper manner in any one or more of the embodiments or examples.

Although embodiments of the present disclosure have been shown and described, it will be understood by those of ordinary skill in the art that many changes, modifications, replacements, or variations may be made to these embodiments without departing from the principles and spirit of the present disclosure, the scope of which is defined by the following claims and their equivalents.

## Claims

1. A battery (1), **characterized by** comprising:
a housing (11), wherein a battery core accommodating cavity (111) is formed in the housing (11), and at least one end of the housing (11) forms an opening (112);
a cover plate (12), the cover plate (12) being connected to the housing (11) and covering the opening (112), and an explosion-proof valve (16) being disposed on the cover plate (12);
a current collecting disk (13), the current collecting disk (13) being disposed within the battery core accommodating cavity (111), and the current collecting disk (13) being spaced apart from at least a portion of the cover plate (12) to form a pressure relief cavity in communication with the explosion-proof valve (16).

2. The battery (1) according to claim 1, wherein at least one of the surfaces of the cover plate and of the current collecting disk (13) facing towards each other are formed with a recess portion recessed away from each other, the recess portion defining the pressure relief cavity therein.

3. The battery (1) according to claim 1 or 2, wherein a surface of the current collecting disk (13) facing the cover plate (12) is formed with a pressure relief groove (131), and a bottom wall of the pressure relief groove (131) is spaced apart from the cover plate (12) and defines the pressure relief cavity, and the pressure relief groove (131) at least partially overlaps with a projection of the explosion-proof valve (16) in a thickness direction of the current collecting disk (13).

4. The battery (1) according to any one of claims 1 to 3, wherein a surface of the current collecting disk (13) facing away from the cover plate (12) is formed with a first protrusion (141), the first protrusion (141) being adapted to abut against and be welded with an electrode tab (21) of the battery core (20) within the battery core accommodating cavity (111).

5. The battery (1) according to claim 4, wherein a side of the cover plate (12) towards the current collecting disk (13) is formed with a second protrusion (142), the second protrusion (142) being adapted to abut against a surface of the current collecting disk (13) facing the cover plate (12).

6. The battery (1) according to claim 5, wherein the current collecting disk (13) is arranged overlapping with the cover plate (12) in a thickness direction of the battery (1), wherein the projections of the first protrusion (141) and the second protrusion (142) on the plane on which the cover plate (12) lies are staggered or partially overlapping.

7. The battery (1) according to claim 5 or 6, wherein at least a portion of the first protrusion (141) is disposed around the central axial periphery of the current collecting disk (13); or
at least a portion of the second protrusion (142) is disposed around the central axial periphery of the cover plate (12).

8. The battery (1) according to any of claims 1 to 7, wherein a surface of the current collecting disk (13) facing the cover plate (12) is recessed to form a pressure relief groove (131) on a side of current collecting disk (13), and to form a first protrusion (141) on the other side of the current collecting disk (13), and the first protrusion (141) abuts against and is welded with an electrode tab (21).

9. The battery (1) according to claim 8, wherein the pressure relief groove (131) comprises:
a first groove portion (1311), the first groove portion (1311) being configured as a fan-shaped groove surrounding at least portion of outer circumference of the central axis of the current collecting disk (13);
a second groove portion (1312), one end of the second groove portion (1312) being in communication with an end of the first groove portion (1311) in the circumferential direction, and the second groove portion (1312) extending in a radial direction.

10. The battery (1) according to claim 9, wherein an outer peripheral edge of the current collecting disk (13) is formed with an outer edge portion (133) protruding outward along the radial direction, and the other end of the second groove portion (1312) extends to the outer edge portion (133).

11. The battery (1) according to any one of claims 1 to 10, wherein the current collecting disk (13) is formed with welding portions adapted to connect with an electrode tab (21), the welding portions being configured in multiple and arranged at intervals along a radial direction of the current collecting disk (13).

12. The battery (1) according to claim 9 or 10, wherein the pressure relief groove (131) is configured in multiple to surround the central axis of the current collecting disk (13) and is arranged at intervals in the circumferential direction of the central axis of the current collecting disk (13).

13. The battery (1) according to claim 12, wherein the pressure relief grooves (131) are configured as two and arranged symmetrically on the current collecting disk (13), wherein the second groove portion (1312) of one of the pressure relief grooves (131) and the second groove portion (1312) of the other of the pressure relief grooves (131) extend away from each other in the radial direction.

14. The battery (1) according to claims 9 or 10, wherein a surface of the first protrusion (141) towards the electrode tab (21) is formed with a frosted surface.

15. The battery (1) according to claim 12, wherein abutment surfaces (135) are formed on the current collecting disk (13) between two adjacent pressure relief grooves (131), multiple second protrusions (142) are formed on a side of the cover plate (12) towards the current collecting disk (13), and the second protrusions (142) are adapted to abut against corresponding abutment surface (135).

16. The battery (1) according to any one of claims 1 to 15, wherein the explosion-proof valve (16) is disposed in an explosion-proof valve mounting hole (121) on the cover plate (12), the explosion-proof valve (16) being welded to the cover plate (12), and adapted to conduct the explosion-proof valve mounting hole (121) after pressure of the pressure relief cavity reaches a preset pressure, and the explosion-proof valve (16) has a thickness smaller than that of the cover plate (12).

17. A battery assembly (1000) comprising battery (1) according to any one of claims 1 to 16.

18. A power equipment (10000) comprising battery (1) according to any one of claims 1 to 16.
